# EUROPEAN PATENT SPECIFICATION

(11) **EP 2 498 902 B1**
(45) Date of publication and mention of the grant of the patent: **31.12.2014**
(21) Application number: 10760269.0
(22) Date of filing: 29.09.2010
(51) Int. Cl.: B01F 7/18, H02P 5/74, B01F 15/00

(54) **IMPROVED PROCESS FOR THE PROCESSING OF FOOD PRODUCTS, IN PARTICULAR FOR THE PROCESSING OF ICE-CREAM, AND MACHINE FOR EFFECTING SAID PROCESS**
VERBESSERTES VERFAHREN ZUR HERSTELLUNG VON LEBENSMITTELPRODUKTEN, IM BESONDEREN ZUR HERSTELLUNG VON SPEISEEIS UND MASCHINE ZUR DURCHFÜHRUNG DES VERFAHRENS
PROCÉDÉ AMÉLIORÉ POUR LA FABRICATION DE PRODUITS ALIMENTAIRES, EN PARTICULIER POUR LA FABRICATION DE CRÈME GLACÉE, ET MACHINE POUR EFFECTUER LEDIT PROCÉDÉ

(30) Priority: 10.11.2009 IT MI20091961
(43) Date of publication of application: 19.09.2012
(73) Proprietor: G.S.G. S.r.l., 36075 Montecchio Maggiore - Vicenza (IT)
(72) Inventor: BRAVO, Genesio, I-36075 Alte Ceccato-Vicenza (IT)
(74) Representative: Martegani, Franco
(86) International application number: PCT/EP2010/005963
(87) International publication number: WO 2011/057692

(56) References cited:
- FR-A1- 2 731 877
- GB-A- 2 416 079
- US-A- 5 472 273
- US-A1- 2009 109 792

## Description

The present invention relates to an improved process for the processing of food products, in particular for the processing of ice-cream. The invention is also extended to the machine used for effecting this process.

The process and machine to which the invention refers can be used in the processing of food mixtures (such as ice-cream, pastry cream, chocolate, delicatessen products and so forth), subjected to single or combined thermal treatment (for example cooling alone, or heating and cooling) inside a cylindrical basin equipped with a stirrer or rotating mixer. The rotation of the latter is also controlled by means of an appropriate electronic circuit, programmed for the recipe to be prepared.

In machines known for the processing of food mixtures, the velocity of the motor which activates the mixer is promoted starting from an electronic card, programmed for this purpose, whose digital signal is read by an inverter, after conversion to a corresponding analog signal operated by a digital to analog converter, DAC.

The analog signal which is transmitted to the inverter, destined for controlling the rotation rate of the motor and therefore the mixer, is, however, a low-frequency signal which is the cause of the drawbacks examined hereunder.

First of all, the communication from the micro-processor card to the inverter, through the DAC, is subject to various disturbances of an electromagnetic nature, caused by the inverter itself. There is no point in explaining at length how these disturbances can be generated within the circuit logics of the inverter, but they can certainly arise in the communication (connection) wire between the DAC and inverter (causing positive or negative voltage spikes, which can be added to or subtracted from the supply voltage of the same inverter) and less frequently, but this cannot be excluded, also in the wire of digital signals which pass to the DAC from the microprocessor card. These false impulses can cause anomalies in the orders received by the inverter, either blocking it or making it operate with the disturbance signal, instead of the correct signal coming from the card.

In the known machines of the type under examination, there is also the disadvantage that the actuation motor of the mixer, through the intermediation of the inverter, can only operate for quantized voltage variations, i.e. sufficiently intense as to dominate the background noise caused by the inverter, with evident limitations on the selection scale of the rotation rates of the mixer. Operating with a voltage varying from 0 to 10V, for example, a different velocity can be associated for each 1V of voltage increase, consequently up to a maximum of 10 rates, totally insufficient for guaranteeing the correct formation of the product, compared with the wide variety of processings requested of these machines.

There is also the additional disadvantage that the change in the velocity regime of the motor takes place almost instantaneously, according to the only layout possible for the known system, i.e. that controlling the stoppage of the motor in the case of accidental opening of the lid of the mixer in movement. This prevents the acceleration/deceleration variation dynamism which however is required for the passage from one rotation velocity regime to another.

Another problem linked to known machines for the processing of food products, derives from the substantial mono-directionality of the analog communication signal between the DAC and inverter. This communication is in fact exclusively effected from the microprocessor card towards the inverter, passing through the DAC, without any possibility of effecting a reverse run. For this reason, the inverter can in no way communicate with the electronic card, and this in turn is not capable of knowing the response of the inverter to the signal previously transmitted to it (i.e. the system is not able to verify the effective and accurate actuation of the program, which prevents certain processing choices to be automatically effected).

According to GB 2416079 A it's disclosed a process for processing food products in one basin with the use of a mixer activated by a motor controlled by control means, in turn in communication with an electronic card equipped with a micro-processor; a cross dialogue between the card and the control means is provided so as to command the interrogation of the control means on its instantaneous state.

The main objective of the present invention is to provide a process and the relative machine for effecting this, suitable for allowing an extreme diversification in the rotation rates of the motor, so as to guarantee for each recipe inserted in the memory of the microprocessor card, a sequence of operations, each marked by a specific rotation rate for said preparation.

A further objective of the invention is to provide a machine of the type indicated above, in which the inverter is driven on the basis of a software program inside the microprocessor, suitable for communicating the exact rotation rate of the motor at the appropriate moment and with entity changes which can also be infinitesimal.

Another objective of the invention is to provide a process and machine in which the change in the mixing velocity regime of the ingredients is not instantaneous but gradual, with acceleration/deceleration regimes selected in relation to the specific recipe to be prepared.

The invention also has the objective of providing a machine of the type specified above, equipped with a communication system to the inverter which is immune to errors generated by random disturbances caused by electric lines.

Another objective of the machine and process of the invention is also to continuously monitor the precise operating condition of the inverter, intervening on it with specific commands if the optimum operating conditions are not respected.

Finally, an objective of the invention is to provide a machine which allows the insertion of a series of inverter devices, suitable for driving various motors using a single communication wire.

These and other objectives are achieved with the process of claim 1. Preferred embodiments of the invention are indicated in the remaining claims.

With respect to the known art in this field, in the machine of the invention, the signal sent from the microprocessor card acts on the inverter in advance with respect to the disturbance, in this way overcoming the drawbacks due to the latter. The inverter is in turn capable of distinguishing the disturbance signals from the command signals coming from the card.

Thanks to the invention, the process is also no longer actuated for quantized variations in the rotation rate of the motor, but for frequency infinitesimals of the current with which the inverter activates the motor. The same invention also allows the acceleration/deceleration time of the motor to be selected, thus graduating the passage from one velocity regime to another in relation to the recipe to be prepared.

Finally, the process and machine of the invention offer the advantage of controlling that each processing phase of the product has actually been effected, repeating them automatically if this is not the case.

A further advantage of the machine of the invention lies in the possibility of limiting the number of wires between the electronic card and inverter, also in the case of the contemporaneous presence of various basins for the processing of the ingredients.

These and other objectives, advantages and characteristics are evident from the following description of a preferred embodiment of the invention, illustrated, as a non-limiting example, in the figure of the enclosed drawings, wherein:

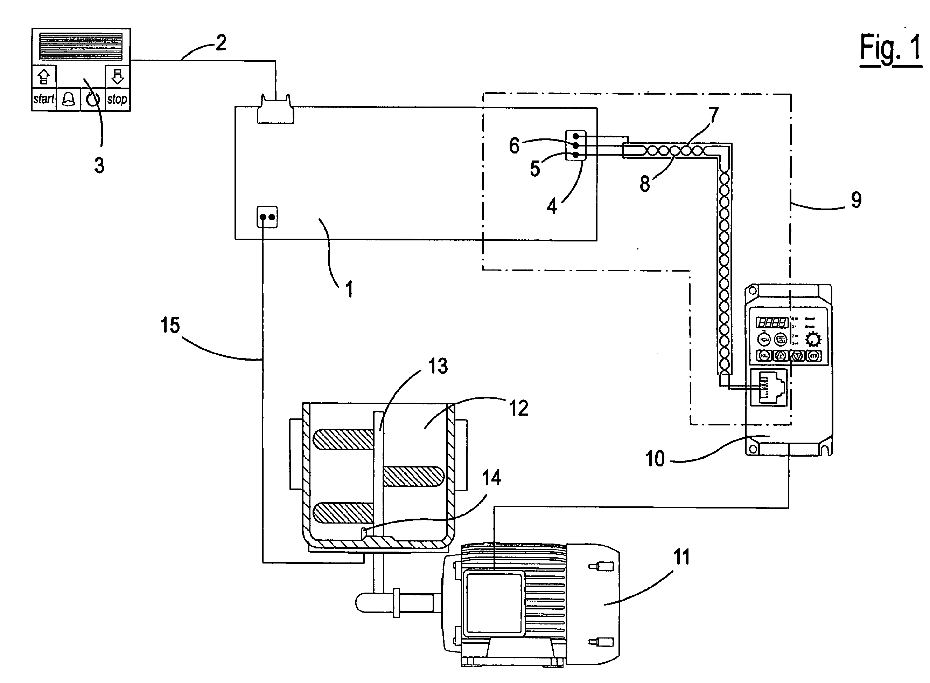

- figure 1 illustrates a block scheme of the main constitutive elements of the machine of the invention, integrated with the respective connections; and
- figure 2 illustrates the machine of figure 1, in the variant equipped with a series of basins for processing the ingredients.

In the example illustrated, the machine is of the type normally used for the processing of ice-cream products, but it is understood that this can also be equally used for preparing food products different from ice-cream.

The machine essentially comprises a tank 12, equipped with means (not shown) necessary for effecting the heating/cooling of the ingredients being processed in the same. A mixer or rotating stirrer 13 is also assembled inside this basin 12, together with at least one probe 14 suitable for transmitting the corresponding temperature signal to the electronic card with a microprocessor 1 by means of a communication wire 15. The card 1 is in turn connected by a wire 2 to the keyboard 3, the latter suitable for programming the card with the starting commands (temperature of the mixture, processing time, etc.) inserted by the user.

The card 1 is also connected to the inverter 10, driven by the motor 11 which activates the mixer 13, by means of an electronic bidirectional communication circuit 9 with serial transmission and protocol of the *Modbus, Canbus or Profibus* type, for example. A serial port 4 (for example of the type RS-485) forms part of this electronic circuit 9, equipped with poles 5 and 6 on which the multipolar wires 7 and 8, respectively, in communication with the inverter 10, are inserted. The circuit 9 is therefore of the type suitable for transporting digital signals in packages and with a bidirectional mode (half-duplex or full-duplex). In this transportation, the information is communicated consecutively and sequentially reaches the receiver, in the same order with which it is transmitted by the sender.

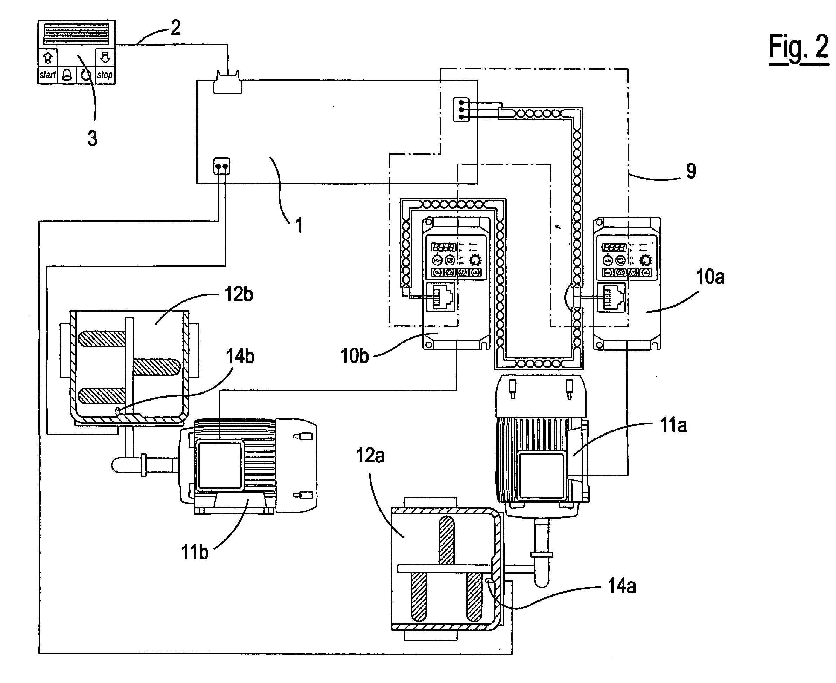

A procedure effected in continuous is present on the software charged into the card 1, which sends particular requests to the inverter for knowing its instantaneous state. These commands are in digital format, consisting of packages of data sent at the expiry of a timer (preferably at each Δt=0,1s), or with the occurrence of an event, such as for example an alarm, or a pre-established time or temperature. Each package consists of a preamble (ID) which indicates to which inverter it is connected in series (useful in the version of the machine with more than one basin 12a, 12b of figure 2), and a control system of the package integrity (called CRC), in addition to the actual process data. The continuous estimation at time "t" of the state of the single inverter (10a, 10b in figure 2) serves to understand whether the commands imparted at time "t-1" have been executed or not by the same inverter.

In particular, the card 1 communicates with the inverter 10 through the circuit 9, to identify:
(a) the ID of the inverter;
(b) the state of the inverter (i.e. the operating state of the motor 11), and:
   (b1) whether the inverter is operating (mixer in rotation):
      - running direction
      - running frequency
      - measurement of the outlet voltage
      - measurement of the power absorbed by the motor
      - functioning time
      - acceleration time
   (b2) whether the inverter is in stop phase (mixer at a standstill):
      - running frequency
      - measurement of the power absorbed by the motor
      - deceleration time
      - overall ignition time
   (b3) whether the inverter is in alarm state (malfunctioning of the motor):
      - running frequency
      - last alarm detected.

The responses obtained with this procedure are compared by the card 1 with particular tables present in its memory through the software. At the same time, the other data are also acquired by the probes available (for example the temperature probes 14a, 14b) and these are also compared in the same way.

Each table therefore corresponds to a specific recipe, which has a double function: guiding the processing of the product and controlling the state of each inverter in that particular phase. Said table is composed of lines which represent the processing phases of the particular product and columns which contain the expected values for that phase.

An example of a table for the recipe of pastry cream can be the following, in which:
- Arrival T°: is the temperature revealed by the probe 14 at which the phase finishes, if the column "Time" is equal to -1;
- Time: if equal to -1 it is not considered; if, on the other hand, it has a value different from -1, it is used as maximum standing time in that phase;
- Running direction: FW (forwards)
- Hz: rotation rate of the motor 11;
- Max Vout: maximum feeding voltage of the motor 11;
- Max Iout: maximum feeding current of the motor 11;
- Acceleration/deceleration time in the passage of the motor 11 from one velocity regime to another.

| PHASE | Arrival T° | Time (s) | Running direction | Hz | Max Vₒᵤₜ [V] | Max Iₒᵤₜ [A] | Acceleration/ deceleration time (s) |
|---|---|---|---|---|---|---|---|
| Heating | 92 | -1 | FW | 90 | 380 | 10 | 150 |
| Preservation | 92 | 900 | FW | 100 | 380 | 10 | 5 |
| Rapid cooling | 50 | -1 | FW | 75 | 380 | 10 | 100 |
| Slow cooling | 30 | -1 | FW | 40 | 380 | 12 | 50 |
| Very slow cooling | 4 | -1 | FW | 20 | 380 | 14 | 200 |
| Preservation | 4 | -1 | FW | 8 | 380 | 14 | 20 |

When it is in the initial "Heating" phase, the card 1 is programmed to command a temperature of 92°C in the basin 12, with the mixer moving under FW conditions, 90 Hz, 380 V and 10 A, with an acceleration from standstill which has a duration of 150 s. When the temperature at the probe 14 has reached 92°C, the card 1 repeats the previous verification cycle (a), (b) and if the control is successful, the same card activates the subsequent "Preservation" phase. In this phase, the temperature is maintained at 92°C for a time of 900 seconds and the motor 11 is brought from 90 to 100 Hz in 5 seconds. The card 1 repeats the previous verifications (a) and (b), with the subsequent passage to the remaining phases of the treatment.

In short therefore, the card 1 applies the control procedure described (a) and (b), through which the inverter 10 is continuously monitored up to the subsequent phase, as indicated in the first column in the table. Should a value not in conformance with the expected value for that process reach the microprocessor card, the alarm intervention procedure is applied, which interrogates the inverter with the request to obtain the error which has occurred. The evaluation of the response error is therefore effected by the same procedure which allows the correct safety measurements present in the machine to be applied.

As already mentioned, these tables also refer to the commands to be sent to the inverter 10. The microprocessor card 1 is in fact capable of reading from these tables, the rate and direction for driving the inverter, but also the acceleration or deceleration times for passing from one velocity to another. The transition from 75 Hz of "Rapid cooling" to 40 Hz of "Slow cooling", for example, could be extremely slow, with a constant reduction in the velocity of numerous tens of seconds. In this way, the complete amalgam of the ingredients recently cooked is ensured, for example for the preparation being examined. The inverter is consequently capable of reproducing the rhythms of the confectioner's hand which knowingly gently slows down the mixing of the paste. For another recipe, on the other hand (for example chocolate tempera) an almost instantaneous acceleration must be established from a low frequency (e.g. 20 Hz) to a high frequency (e.g. 90 Hz), subsequently returning, after a few seconds, again almost instantaneously, to a low frequency, thus generating true velocity peaks.

In the known art, this acceleration/deceleration variation dynamicity from preparation to preparation is impossible to obtain, as a similar variation is always fixed to a value which, if the lid of the basin is opened, is such as to allow the motor to be stopped before the lid is completely open. According to the invention, on the other hand, the alarm procedures, indicating possible danger for the operator, are managed in a recipe program which is separate with respect to the functioning of the inverter, consequently following an independent procedure which commands the inverter to stop the motor very rapidly in the case of a situation of danger for the user

(opening of protection doors during the functioning, absorption overcurrents of the motor, intervention of the thermal protections of the same motor).

Consequently, in short, the innovation specifically lies in the possibility of actively controlling the inverter 10 with a safe cross dialogue system with the card 1, in which this communication system is not only used for commanding the functions of the activation inverter and velocity control of the motor 11, but also for interrogating it on its instantaneous state.

Furthermore, the possibility of establishing the acceleration and deceleration rate of the mixer 13 as desired, allows the precision in the processing of products prepared by the machine to be considerably increased, thus obtaining a higher-quality and surprising result. The control of the maximum voltage of the motor, moreover, lengthens the life of the latter, whereas the control of the maximum current absorbed prevents damage of the coils (for example in the case of blockage of the motor due to the formation of ice in the basin 12).

## Claims

1. A process for processing food products in at least one basin (12a, 12b) with the use of a mixer (13a, 13b), each mixer (13a, 13b) activated by a motor (11a, 11b) controlled by an inverter (10a, 10b), in turn in communication with an electronic card equipped with a micro-processor (1), **characterized in that** it comprises a cross dialogue between said card (1) and the inverter (10a, 10b) so as to command the interrogation of the same inverter (10a, 10b) on the instantaneous state of the latter; said interrogation of the inverter (10a, 10b) is effected by means of continuous procedure; said card (1) communicating with the inverter (10a, 10b), in order to know:
the ID of the inverter;
the inverter state, and:
whether the inverter is operating, for example mixer in rotation, comprising:
• running direction,
• running frequency,
• measurement of the outlet voltage,
• measurement of the power absorbed by the motor,
• functioning time and
• acceleration time;
whether the inverter is in stop phase, for example mixer at a standstill, comprising:
• running frequency,
• measurement of the power absorbed by the motor,
• deceleration time and
• overall ignition time;
whether the inverter is in alarm state, for example motor malfunctioning, comprising:
• running frequency and
• last alarm detected;
the responses obtained by means of said procedure, being compared by the card (1) with tables present in its memory through the software, wherein each table corresponds to a precise recipe;
wherein said table has the double function of guiding the product processability and controlling the state of each inverter (10a, 10b) **in that** particular phase.

2. The process according to claim 1, **characterized in that** said interrogation of the inverter (10a, 10b) is effected by means of a continuous procedure, the continuous evaluation at time "t" of the state of the single inverter (10a, 10b), indicating whether the commands imparted at time "t-1" have been executed or not by the same inverter.

3. The process according to claims 1 or 2, **characterized in that** said commands are in digital format, consisting of data packages sent with the expiry of a timer or occurrence of a pre-established event.

4. The process according to claim 3, **characterized in that** each package consists of a preamble (ID) which indicates to which inverter (10a, 10b) it is directed, and a control system (CRC) of the package integrity, in addition to the process data.

5. The process according to claim 4, **characterized in that** said process data comprise the instantaneous temperature of the food mixture being processed inside said basin (12a, 12b).

6. The process according to claim 4, **characterized in that** said process data comprise the acceleration/deceleration time of the motor (11a, 11b) during the transition regimes from one rotational rate to the other of the mixer (13a, 13b).

7. The process according to any of the claims 1 to 6, **characterized in that** said table consists of lines which represent the processing phases of a particular product, and columns containing the values envisaged for that phase.

8. The process according to claim 7, **characterized in that** said table comprises the following parameters:
- instantaneous temperature of the blend in the basin (12a, 12b);
- running direction of the motor (11a, 11b);
- rotational rate of the motor (11a, 11b);
- maximum supply voltage of the motor (11a, 11b);
- maximum supply current of the motor (11a, 11b);
- acceleration/deceleration time in the passage of the motor (11a, 11b) from one speed system to another.

## Patentansprüche

1. Prozess zum Verarbeiten von Nahrungsmittelprodukten in zumindest einem Behälter (12a, 12b) mit der Verwendung eines Mischers (13a, 13b), wobei jeder Mischer (13a, 13b) durch einen Motor (11a, 11b) aktiviert ist, der durch einen Wechselrichter (10a, 10b) gesteuert ist, der seinerseits in Kommunikation mit einer elektronischen Karte steht, die mit einem Mikroprozessor (1) ausgestattet ist, **dadurch gekennzeichnet, dass** er einen Kreuzdialog zwischen der Karte (1) und dem Wechselrichter (10a, 10b) umfasst, um so die Abfrage des Wechselrichters (10a, 10b) bezüglich des augenblicklichen Zustandes desselben anzuweisen; wobei die Abfrage des Wechselrichters (10a, 10b) mittels einer kontinuierlichen Vorgehensweise bewirkt wird; wobei die Karte (1) mit dem Wechselrichter (10a, 10b) kommuniziert, um Kenntnis zu erlangen über:
die ID des Wechselrichters;
den Wechselrichterzustand, und:
ob der Wechselrichter in Betrieb ist, beispielsweise Mischer in Rotation, umfassend:
• Laufrichtung,
• Lauffrequenz,
• Messung der Auslassspannung,
• Messung der Leistung, die von dem Motor aufgenommen wird,
• Funktionszeit, und
• Beschleunigungszeit;
ob der Wechselrichter in der Stoppphase ist, beispielsweise ein Mischer im Stillstand, umfassend:
• Lauffrequenz,
• Messung der Leistung, die von dem Motor aufgenommen wird,
• Verlangsamungszeit, und
• Gesamtzündzeit;
ob der Wechselrichter in einem Alarmzustand ist, beispielsweise eine Fehlfunktion des Motors, umfassend:
• Lauffrequenz, und
• letzter detektierter Alarm;
wobei die Reaktionen, die mittels der Vorgehensweise erhalten werden, durch die Karte (1) mit Tabellen, die in ihrem Speicher vorhanden sind, durch die Software verglichen werden, wobei jede Tabelle einem präzisen Rezept entspricht;
wobei die Tabelle die Doppelfunktion zum Führen der Produktverarbeitbarkeit und zum Steuern des Zustandes jedes Wechselrichters (10a, 10b) in dieser bestimmten Phase aufweist.

2. Prozess nach Anspruch 1, **dadurch gekennzeichnet, dass** das Abfragen des Wechselrichters (10a, 10b) mittels einer kontinuierlichen Vorgehensweise bewirkt wird, wobei die kontinuierliche Bewertung zum Zeitpunkt "t" des Zustandes des einzelnen Wechselrichters (10a, 10b) angibt, ob die Anweisungen, die zum Zeitpunkt "t-1" übermittelt wurden, durch den Wechselrichter ausgeführt worden sind oder nicht.

3. Prozess nach einem der Ansprüche 1 oder 2, **dadurch gekennzeichnet, dass** die Anweisungen im Digitalformat vorliegen und Datenpakete enthalten, die mit dem Ablauf eines Zeitgebers oder einem Auftreten eines vorher eingerichteten Ereignisses gesendet werden.

4. Prozess nach Anspruch 3, **dadurch gekennzeichnet, dass** jedes Paket aus einer Einleitung (ID), die angibt, zu welchem Wechselrichter (10a, 10b) sie geführt wird, und einem Steuersystem (CRC) der Paketintegrität zusätzlich zu den Prozessdaten besteht.

5. Prozess nach Anspruch 4, **dadurch gekennzeichnet, dass** die Prozessdaten die augenblickliche Temperatur des Nahrungsmittelgemisches, das innerhalb des Behälters (12a, 12b) verarbeitet wird, umfassen.

6. Prozess nach Anspruch 4, **dadurch gekennzeichnet, dass** die Prozessdaten die Beschleunigungs-/Verlangsamungszeit des Motors (11a, 11b) während der Übergangsgebiete von einer Drehzahl zu der anderen des Mischers (13a, 13b) umfassen.

7. Prozess nach einem der Ansprüche 1 bis 6, **dadurch gekennzeichnet, dass** die Tabelle aus Linien, die die Verarbeitungsphasen eines bestimmten Produktes repräsentieren, und Spalten besteht, die die Werte enthalten, die für diese Phase betrachtet werden.

8. Prozess nach Anspruch 7, **dadurch gekennzeichnet, dass** die Tabelle die folgenden Parameter umfasst:
- augenblickliche Temperatur der Mischung in dem Behälter (12a, 12b);
- Laufrichtung des Motors (11a, 11 b);
- Drehzahl des Motors (11a, 11 b);
- maximale Zufuhrspannung des Motors (11 a, 11 b);
- maximaler Zufuhrstrom des Motors (11a, 11 b);
- Beschleunigungs-/Verlangsamungszeit in dem Durchgang des Motors (11 a, 11 b) von einem Drehzahlsystem zu einem anderen.

## Revendications

1. Procédé de traitement de produits alimentaires dans au moins un bac (12a, 12b) à l'aide d'un mélangeur (13a, 13b), chaque mélangeur (13a, 13b) étant actionné par un moteur (11a, 11b) commandé par un onduleur (10a, 10b), lui-même en communication avec une carte électronique équipée d'un microprocesseur (1), **caractérisé en ce qu'**il comprend un dialogue croisé entre ladite carte (1) et l'onduleur (10a, 10b) afin de commander l'interrogation du même onduleur (10a, 10b) sur l'état instantané de ce dernier, ladite interrogation de l'onduleur (10a, 10b) étant effectuée au moyen d'une procédure continue ; ladite carte (1) communiquant avec l'onduleur (10a, 10b) afin de connaître :
l'identité de l'onduleur ;
l'état de l'onduleur, et :
si l'onduleur actionne par exemple le mélangeur en rotation, comprenant :
• la direction de fonctionnement,
• la fréquence de fonctionnement,
• la mesure de la tension de sortie,
• la mesure de la puissance absorbée par le moteur,
• le temps de fonctionnement et
• le temps d'accélération ;
si l'onduleur est en phase d'arrêt, par exemple avec le mélangeur au repos, comprenant :
• la fréquence de fonctionnement,
• la mesure de la puissance absorbée par le moteur,
• le temps de décélération et
• la durée totale d'allumage ;
si l'onduleur est dans un état d'alarme, par exemple pour un dysfonctionnement du moteur, comprenant :
• la fréquence de fonctionnement et
• la dernière alarme détectée ;
les réponses obtenues au moyen de ladite procédure étant comparées par la carte (1) à des tableaux présents dans sa mémoire par l'intermédiaire du logiciel, chaque tableau correspondant à une recette précise ; dans lequel ledit tableau a la double fonction de guider le traitement du produit et de commander l'état de chaque onduleur (10a, 10b) dans cette phase particulière.

2. Procédé selon la revendication 1, **caractérisé en ce que** ladite interrogation de l'onduleur (10a, 10b) est effectuée au moyen d'une procédure continue, l'évaluation continue à l'instant "t" de l'état de l'onduleur simple (10a, 10b) indiquant si les commandes transmises à l'instant "t-1" ont été ou non exécutées par ce même onduleur.

3. Procédé selon la revendication 1 ou 2, **caractérisé en ce que** lesdites commandes sont sous format numérique, et sont constituées de paquets de données envoyés à l'expiration d'une minuterie ou lors de l'occurrence d'un événement préétabli.

4. Procédé selon la revendication 3, **caractérisé en ce que** chaque paquet est constitué d'un préambule (ID) qui indique à quel onduleur (10a, 10b) il est destiné, et d'un système de commande (CRC) de l'intégrité du paquet, en plus des données de procédé.

5. Procédé selon la revendication 4, **caractérisé en ce que** lesdites données de procédé comprennent la température instantanée du mélange alimentaire qui est traité dans ledit bac (12a, 12b).

6. Procédé selon la revendication 4, **caractérisé en ce que** lesdites données de procédé comprennent le temps d'accélération/décélération du moteur (11a, 11b) pendant les régimes de transition d'une vitesse de rotation à l'autre du mélangeur (13a, 13b).

7. Procédé selon l'une quelconque des revendications 1 à 6, **caractérisé en ce que** ledit tableau est constitué de lignes qui représentent les phases de traitement d'un produit particulier, et de colonnes contenant les valeurs prévues pour cette phase.

8. Procédé selon la revendication 7, **caractérisé en ce que** ledit tableau comprend les paramètres suivants :
- température instantanée du mélange dans le bac (12a, 12b) ;
- direction de fonctionnement du moteur (11a, 11b);
- vitesse de rotation du moteur (11a, 11b) ;
- tension d'alimentation maximale du moteur (11a, 11b);
- courant d'alimentation maximal du moteur (11a, 11b) ;
- temps d'accélération/décélération dans le passage du moteur (11a, 11b) d'un système de vitesse à un autre.
